# FASCICULE DE BREVET EUROPEEN

(11) **EP 0 713 996 B1**
(45) Date de publication et mention de la délivrance du brevet: **28.08.2002**
(21) Numéro de dépôt: 95402593.8
(22) Date de dépôt: 17.11.1995
(51) Int. Cl.: F16L 55/18, F16L 55/16

(54) **Bride d'étanchéité pour le tubage interne de canalisations**
Dichtungsflansch für die innere Aufnahme von Rohrleitungen
Sealing flange for receiving pipes in its interior

(30) Priorité: 22.11.1994 FR 9413980
(43) Date de publication de la demande: 29.05.1996
(73) Titulaire: GAZ DE FRANCE (SERVICE NATIONAL), F-75017 Paris (FR)
(72) Inventeur: Vick, Steve, Norton St-Philip, Somerset (GB); Hewlett, Gordon, Wellow, Avon (GB)
(74) Mandataire: Lerner, François

(56) Documents cités:
- EP-A- 0 604 264
- BE-A- 756 069
- DE-U- 8 707 440
- FR-A- 1 396 229
- FR-A- 2 020 937
- FR-A- 2 602 568
- US-A- 1 817 776
- US-A- 5 082 313

## Description

L'invention se rapporte à un élément de liaison prévu sur des canalisations et autres conduites, par exemple pour la distribution d'eau ou de gaz.

En particulier, l'invention propose une bride d'étanchéité pour le guidage étanche d'un tube relativement souple, utilisé pour le tubage interne notamment d'un tronçon d'une canalisation métallique existante, lorsqu'elle s'avère défectueuse, ce tubage pouvant s'effectuer "en charge" (c'est-à-dire sans interrompre l'approvisionnement de l'utilisateur).

Il existe déjà des moyens pour permettre le raccordement interne d'un tube à une canalisation. US-A-1 817 776 décrit une bride d'étanchéité pour canalisation comportant
- un corps extérieur tubulaire, monobloc, présentant un axe,
- une série de joints annulaires d'étanchéité, disposés sensiblement coaxialement suivant ledit axe, à l'intérieur du corps extérieur et liés à la surface intérieure du corps extérieur, ces joints étant propres à entourer un tube lorsque celui-ci est introduit à l'intérieur de ladite bride, à travers les joints.

Toutefois, cette bride étant destinée à l'accouplement de deux tubes, son utilisation en tant que bride d'étanchéité pour canalisation à tuber risque de présenter un manque de fiabilité concernant l'étanchéité entre la bride et le tube.

D'autre part, EP-A-0 604 264 décrit une bride d'étanchéité pour canalisation à tuber formée de deux demi-coquilles assemblées de manière séparable, chacune constituée d'une série d'éléments eux-mêmes séparables, de sorte que cette bride puisse être démontée et récupérée au moins en partie. La bride comporte
- un corps tubulaire présentant un axe et auquel est liée une série de joints annulaires d'étanchéité, disposés sensiblement coaxialement suivant ledit axe, ces joints étant propres à entourer un tube lorsque celui-ci est introduit à l'intérieur de ladite bride, à travers les joints,
- et au moins un organe annulaire lié au corps tubulaire, pour le guidage et/ou le centrage dudit tube vis-à-vis de ce corps.

Face à cela, l'invention vise à réaliser une solution plus simple, donc plus économique, et permettant de réduire les temps d'intervention.

Par ailleurs, FR-A-2 020 937 décrit des moyens d'accouplement entre deux structures tubulaires de diamètres différents prévues pour être fixées l'une par rapport à l'autre. Ces moyens comprennent un corps tubulaire extérieur à fixer sur le tube extérieur et renfermant des joints annulaires intégrés au corps et adaptés pour recevoir intérieurement le tube intérieur. Ce document ne propose pas de moyens de guidage et/ou de centrage du tube interne par rapport au corps, et cela d'autant moins qu'aucun déplacement des structures tubulaires entre elles n'est prévu après mise en place de ce tube intérieur.

Ainsi, il s'avère qu'actuellement il n'existe pas de moyens de raccordement et/ou de guidage de conduites de tubage qui soient à la fois d'une fabrication et d'une utilisation très simples et économiques, ceci en autorisant un emploi diversifié (notamment prévision de ces moyens indifféremment sur l'une des extrémités amont ou aval des tronçons à rénover) et en garantissant une fiabilité d'étanchéité, compte tenu en particulier des pressions généralement élevées des fluides circulant dans les canalisations à rénover.

Face à cela, l'invention vise donc à faciliter l'introduction et le coulissement d'un tube dans un tronçon de canalisation à rénover, au moindre coût et avec une fiabilité d'utilisation accrue, tout en réduisant les temps d'intervention.

La solution de l'invention pour résoudre ces problèmes est une bride d'étanchéité comprenant en outre au moins un organe annulaire monobloc, lié et coaxial au corps tubulaire, ledit organe annulaire étant réalisé en une matière plus rigide que la série de joints annulaires pour guider et/ou centrer ledit tube vis-à-vis dudit corps.

Une construction de ce type est particulièrement simple à réaliser, offre un faible prix de revient, permet d'améliorer les conditions d'exploitation, quel que soit le degré de formation des opérateurs, tout en améliorant le centrage et/ou le guidage assuré par l'organe annulaire et l'étanchéité assurée par les joints.

Afin d'augmenter la simplicité de fabrication et la compacité de la bride, l'organe annulaire pourra être disposé à l'intérieur du corps.

Selon un mode de réalisation préféré, pour améliorer encore la fiabilité d'utilisation et la simplicité de fabrication, la bride comprend deux dits organes annulaires fixés à l'intérieur dudit corps extérieur vers chacune de ses extrémités. Ainsi, le guidage et le centrage du tube à l'intérieur de chacune des brides disposée à chaque extrémité de la canalisation seront fiabilisés quel que soit le sens d'introduction du tube dans ladite bride. Des brides identiques pourront alors être insérées à chacune des extrémités de la canalisation. La disposition des organes à l'intérieur du tube permettra d'obtenir une bride plus compacte.

La présence d'une surface en tronc de cône sur les organes annulaires alors disposés en sens inverses permet de faciliter encore l'introduction du tube dans la bride.

Toujours afin d'améliorer la fiabilité d'utilisation et réduire les temps d'intervention, le corps extérieur se termine d'un côté par une collerette annulaire extérieure propre à venir se positionner en appui contre une canalisation. La mise en position de la bride de la canalisation sera ainsi plus rapide et plus fiable, tandis que la disposition à l'intérieur de la canalisation augmente la simplicité de fabrication, puisqu'elle ne nécessite pas de pièce de liaison.

Avantageusement, afin de compléter la fiabilité d'utilisation, la bride peut comporter, fixée au corps, une cloison d'étanchéité déchirable pour former une barrière étanche aux fluides. Les opérateurs pourront ainsi disposer d'une bride qui, lorsqu'elle vient fermer une extrémité du tronçon à rénover et que sa cloison n'a pas été traversée par la canalisation de tubage, assure une étanchéité fiable même pendant de longues périodes.

Deux telles cloisons d'étanchéité, entre lesquelles seront disposés les joints d'étanchéité, seront avantageusement prévues.

De cette façon, la bride présentera une grande souplesse d'emploi en pouvant en particulier être montée sur le tronçon à rénover, aussi bien à l'extrémité amont de ce tronçon pour y autoriser l'introduction étanche de la canalisation de tubage, qu'à l'extrémité aval opposée pour la réception de cette canalisation de tubage en sortie du tronçon. Deux telles brides disposées aux deux extrémités du tronçon à rénover suffisent donc pour le tubage interne de ce tronçon.

L'invention concerne en outre un ensemble pour canalisation. Selon l'invention, l'ensemble comprend
- une canalisation à tuber présentant une extrémité ouverte,
- la bride d'étanchéité disposée coaxialement à l'extrémité ouverte de la canalisation extérieure, ladite bride d'étanchéité venant en butée contre l'extrémité ouverte de ladite canalisation extérieure, et
- un tube pour la circulation du fluide à l'intérieur, ledit tube s'étendant à travers ladite bride et ladite canalisation, sensiblement coaxialement à la canalisation, et étant entouré par la série de joints en contact étanche avec lui.

L'invention et sa mise en oeuvre apparaîtront plus clairement à l'aide de la description qui va suivre faite en référence aux dessins annexés, donnés uniquement à titre d'illustration. Dans ces dessins
- les figures 1 à 4 illustrent schématiquement les quatres premières étapes principales de préparation au tubage d'un tronçon de canalisation défectueux ou à rénover,
- la figure 5 est une vue agrandie, en coupe longitudinale médiane, de la bride de l'invention,
- la figure 6 est une vue en perspective éclatée de la bride de la figure 5,
- la figure 7 est une vue en perspective de cette même bride dont les éléments sont réunis,
- la figure 8 montre, en coupe longitudinale agrandie, la bride de l'invention mise en place à l'extrémité aval du tronçon isolé de la figure 4 (repère VIII),
- et, la figure 9 présente, à l'image des figures 1 à 4, une vue d'ensemble de la zone de tubage, alors que le tronçon défectueux est déjà tubé.

Dans la suite de la description, on ne va décrire qu'un exemple de réalisation et d'utilisation préférés de la bride de l'invention, dans le cadre du tubage d'une conduite métallique 1, par exemple en fonte, dans laquelle circule un gaz, suivant le sens de la flèche 6 (tel que du gaz naturel).

Cette canalisation présente à un endroit un tronçon 2 devant être rénové. De part et d'autre de ce tronçon, deux fouilles 4a, 4b sont creusées pour mettre à jour deux portions de canalisation 1b et 1c, situées respectivement en amont et en aval du tronçon 2.

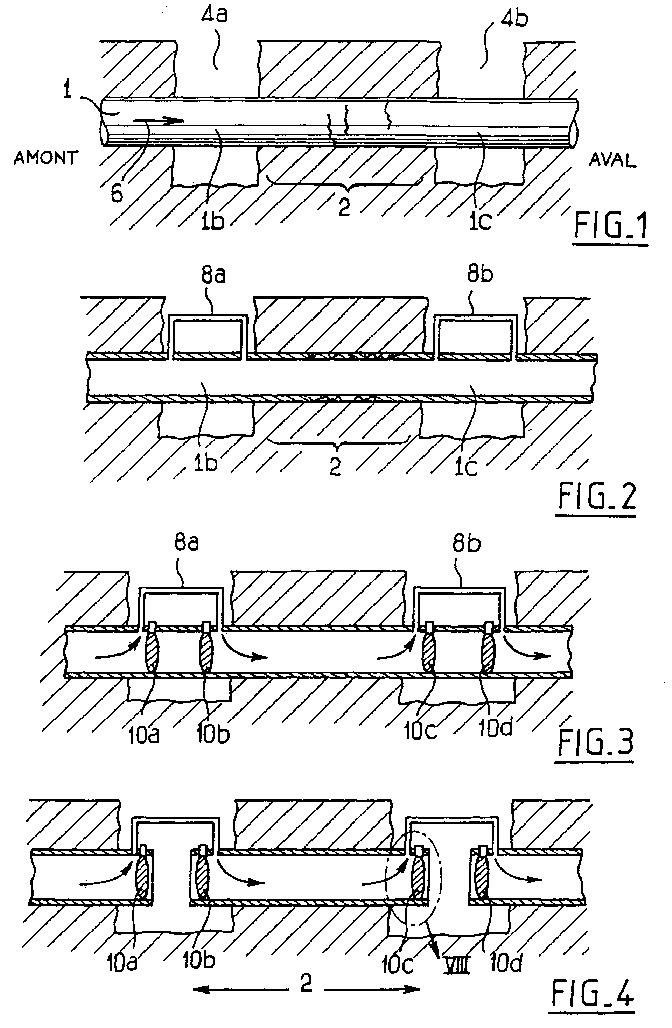

Deux conduites de dérivation de longueur appropriée 8a, 8b (figure 2) sont alors branchées à l'endroit des deux portions déterrées 1b et 1c.

Dès cette opération effectuée, des moyens d'isolement étanche, tels quatre ballons gonflables 10a, 10b, 10c, 10d introduits dans la canalisation via quatre perçages transversaux, sont mis en place pour forcer la circulation du gaz dans les dérivations (Figure 3). Tout ceci est connu, la publication FR 2 663104 décrivant par exemple des moyens adaptés à ces opérations.

On isole alors le tronçon 2 à rénover en coupant la canalisation à l'endroit des deux fouilles, entre les moyens d'isolement étanche précités (Figure 4). Ces deux discontinuités réalisées, on va réellement commencer les opérations de tubage.

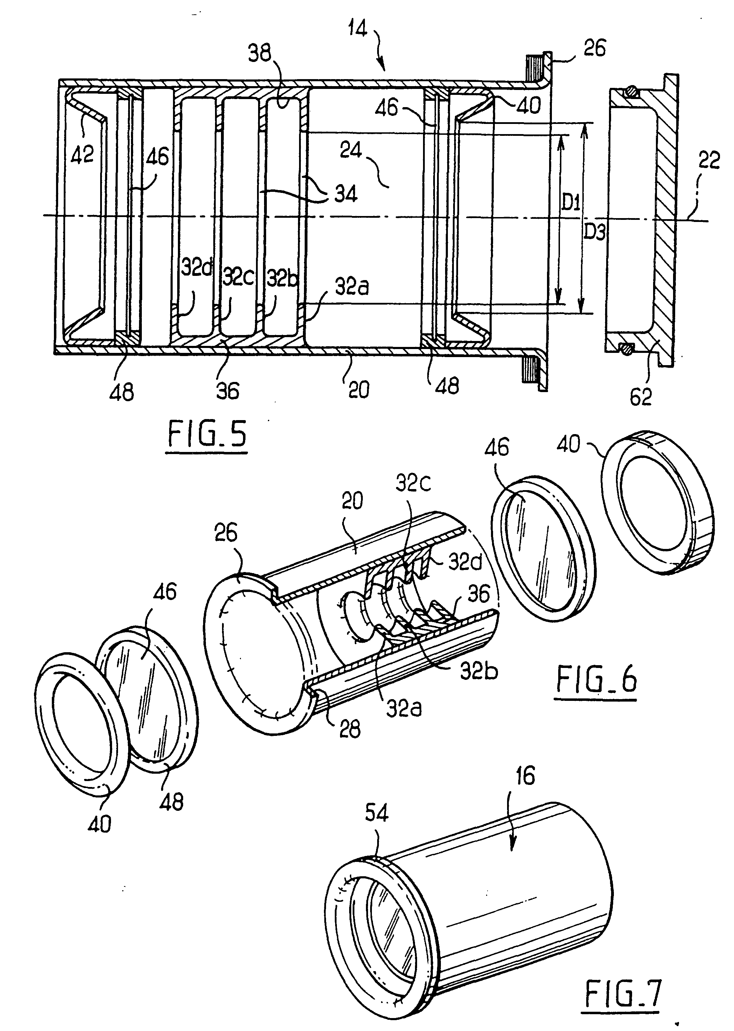

Conformément à l'invention, on va maintenant installer à l'une et/ou l'autre des extrémités amont et aval du tronçon 2, une bride d'étanchéité, illustrée par les figures 5 à 8, qui sera laissée sur la canalisation de tubage une fois le tubage terminé.

Dans la version illustrée, la bride 14 de l'invention consiste essentiellement en une pièce 16 de raccordement et de guidage étanche, qui comporte ici plusieurs éléments fixés les uns aux autres de manière définitive. Des moyens 50 et 54 de fixation étanche de la structure 16 sur la canalisation 1 sont également prévus.

La structure 16 comprend un corps extérieur monobloc 20, d'axe 22 et de passage intérieur axial 24, auquel sont liés étroitement les autres éléments de la structure. Ce corps 20 cylindrique, de section extérieure sensiblement circulaire présentant un diamètre proche du diamètre intérieur de la canalisation porteuse 2, se termine d'un côté par un rebord en saillie vers l'extérieur formant une collerette annulaire 26 à plan de joint 28.

Etant donné que la bride est tout particulièrement prévue pour assurer longitudinalement le guidage en étanchéité aux fluides d'une conduite souple 30 de tubage (par exemple en polyéthylène), elle comprendra plusieurs joints d'étanchéité, en l'espèce quatre 32a, 32b, 32c et 32d. Ces joints discoïdes, traversés chacun par un orifice central 34, sont disposés à l'intérieur du corps extérieur 20, les uns à suite des autres coaxialement suivant l'axe 22. Le diamètre commun D1 de l'orifice central 34 sera égal ou légèrement inférieur au diamètre extérieur D2 de la conduite 30.

De préférence, ces joints 32 seront formés en un seul bloc avec un corps cylindrique creux 36, en faisant saillie sur la face 38 intérieure tubulaire du corps 36. Ce corps intérieur monobloc 36 sera de section extérieure sensiblement circulaire, avec un diamètre extérieur égal ou légèrement inférieur au diamètre intérieur du corps 20 pour y être introduit et son diamètre intérieur sera quant à lui nettement supérieur au diamètre D2. La liaison entre ces corps 20 et 36 pourra être réalisée par tous moyens de fixation étanche connus, tels qu'une colle appropriée.

La structure 16 comporte également des moyens de guidage et de centrage de la conduite de tubage 30. Ces moyens comprennent au moins un organe annulaire 40, disposé ici à l'intérieur du corps 20. Cet organe annulaire est coaxial au corps et présente une surface 42 de guidage et de centrage en tronc de cône également coaxiale au corps.

Cet organe 40 peut être réalisé en une matière plastique relativement rigide, telle en polychlorure de vinyle (P.V.C.), comme le corps extérieur 20 auquel il est étroitement fixé (de manière étanche), en étant par exemple collé à sa face intérieure 44 (tout moyen équivalent de fixation en étanchéité conviendrait également). En variante, l'organe 40 et le corps 20 pourraient être formés en un seul bloc.

Avantageusement, deux organes 40 sont prévus, chacun vers une extrémité libre du corps 20, leur surface 42 étant rétrécie vers l'intérieur du corps 20 et présentant un petit diamètre D3 égal ou légèrement supérieur au diamètre D2 du tube 30. Ainsi, la canalisation 30 est essentiellement guidée par ces organes annulaires dans son mouvement de translation axiale tant dans un sens que dans l'autre, les joints d'étanchéité précités participant également à ce guidage.

La structure 16 comporte en outre au moins une cloison d'étanchéité 46 disposée à l'intérieur du corps 20, sensiblement perpendiculairement à l'axe 22. Cette cloison doit être située après les joints d'étanchéité, par rapport au sens de déplacement prévu pour la conduite 30 dans la bride, pour garantir une étanchéité complète tant que la conduite 30 n'est pas au contact des disques d'étanchéité. Cette cloison forme une barrière étanche aux fluides à l'intérieur du corps 20 qui est propre à être ouverte en l'espèce par la conduite 30. Elle consiste en une membrane ou film plastique discoïde, relativement mince et déchirable, dont le pourtour est bloqué de manière étanche dans une bague de maintien 48. Cette bague est intimement liée à la paroi 44 du corps 20 en étant par exemple collée.

De préférence, pour que la bride soit adaptée à un déplacement axial à travers elle de la conduite 30 dans un sens comme dans l'autre, elle comprend deux cloisons disposées de part et d'autre des joints d'étanchéité.

La bride 14 pourra également comprendre un bouchon 62 qui viendra fermer hermétiquement l'extrémité du corps 20, du côté de sa collerette 26, pour accroître encore l'étanchéité du système, lorsque la bride sera montée sur le tronçon 2 et que la canalisation 30 n'y aura pas encore été introduite.

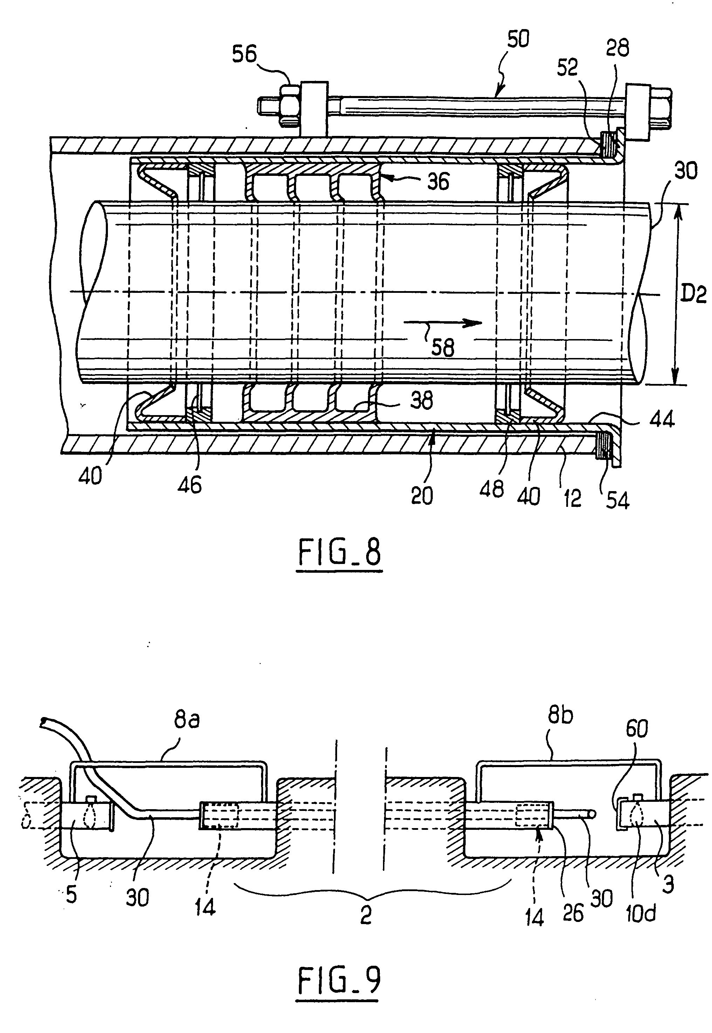

A la figure 8, on a représenté la bride 14 disposée sensiblement coaxialement au tronçon 2, en l'espèce à son extrémité aval 12. Pour la liaison des pièces 12 et 16, on pourra par exemple employer un collier de serrage 50 monté de manière amovible sur le tronçon 2, ou tous moyens équivalents, qui vient presser (par serrage des boulons 56) la collerette 26 de la bride contre la surface terminale 52 de jonction du tronçon 2. Pour l'étanchéité de la liaison, un joint d'étanchéité torique 54 est ici disposé autour du corps 20 en étant en appui contre le plan de joint 28, pour être comprimé entre la collerette 26 et la surface 52 lorsque le collier est serré. Ce collier est ici séparable de la structure 16.

Avantageusement, le diamètre extérieur du corps 20 sera légèrement inférieur au diamètre intérieur du tronçon 2 pour y être introduit sans jeu radial important, seul le rebord 26 dépassant hors de l'extrémité du tronçon. En variante, la bride pourrait tout aussi bien être disposée dans le prolongement du tronçon 2. On notera que le diamètre intérieur du corps 20 doit être supérieur au diamètre extérieur de la conduite 30 pour son passage.

Les diamètres des conduites de tubage et des canalisations à rénover étant normalisés, la production des brides pourra être standardisée en fonction de la taille des deux canalisations à raccorder.

La bride étant ici à l'extrémité aval du tronçon, elle va recevoir la conduite 30 pour la guider hors du tronçon. Dans son déplacement (suivant la flèche 58), la conduite 30 est tout d'abord guidée par la surface tronconique 42 amont puis déchire la première membrane amont qu'elle rencontre. Tant que la conduite 30 n'est pas au contact des disques 32a à 32d, du gaz rentre alors dans le corps 20 mais l'étanchéité est assurée par la seconde membrane aval. La conduite 30 traverse ensuite les joints 32 de manière étanche, chacun de ces disques, réalisé en une matière souple (telle en caoutchouc), se déformant ici élastiquement pour constituer une sorte de cône central autour de la conduite, favorisant encore l'étanchéité autour d'elle. Après être passée à travers les disques d'étanchéité, la conduite déchire alors la seconde membrane pour sortir hors du tronçon 2, l'étanchéité étant réalisée par les joints annulaires.

La figure 9 montre la zone d'intervention à ce moment, alors que l'extrémité aval de la canalisation souple 30 dépasse de la bride. Il ne reste plus qu'à retirer la plaque isolante de fermeture 60 qui obturait jusqu'alors l'entrée du tronçon 3, puis à raccorder la canalisation 30 à ce tronçon et à dégonfler le ballon d'étanchéité 10d.

Ces dernières étapes de mise en place des deux extrémités opposées du tube 30, respectivement dans les parties de canalisation intactes aval 3 et amont 5, n'étant pas du domaine de l'invention, elles ne seront pas décrites plus avant, étant simplement noté qu'en fin d'opération, la mise en place étanche du tube 30 sera telle que le gaz provenant de la canalisation 5 circulera à l'intérieur du tube 30, jusqu'à la canalisation 3, les dérivations 8a, 8b ne jouant plus alors aucun rôle et pouvant en conséquence être retirées, de même que les ballons d'étanchéité encore en place.

A ce moment, et avant de reboucher les fouilles, l'opérateur récupérera le collier de serrage 50 en le séparant des éléments 2 et 14. Cette bride 14, indémontable, demeure autour de la canalisation 30.

Bien entendu, l'invention n'est nullement limitée au mode de réalisation décrit ci-dessus. Ainsi, en variante, les corps 20 et 36 sensiblement coaxiaux et les organes annulaires 40 pourraient être formés en un seul bloc, les membranes 46 étant ensuite rapportées.

## Revendications

1. Bride d'étanchéité (14) pour canalisation à tuber comportant
- un corps extérieur (20) tubulaire, monobloc, présentant un axe (22),
- une série de joints (32a, 32b, 32c, 32d) annulaires d'étanchéité, disposés sensiblement coaxialement suivant ledit axe, à l'intérieur du corps extérieur et liés à la surface intérieure du corps extérieur, ces joints étant propres à entourer un tube (30) lorsque celui-ci est introduit à l'intérieur de ladite bride, à travers les joints,
**caractérisée en ce qu'**elle comprend en outre au moins un organe annulaire (40) monobloc, lié et coaxial au corps tubulaire, ledit organe annulaire étant réalisé en une matière plus rigide que la série de joints annulaires pour guider et/ou centrer ledit tube vis-à-vis dudit corps.

2. Bride selon la revendication 1, **caractérisée en ce qu'**elle comprend deux dits organes annulaires (40) fixés à l'intérieur dudit corps extérieur (20) vers chacune de ses extrémités axiales.

3. Bride selon la revendication 2, **caractérisé en ce que** les organes annulaires (40) présentent chacun une surface (42) en tronc de cône et sont disposés en sens inverses.

4. Bride selon l'une quelconque des revendications précédentes, **caractérisée en ce que** le corps extérieur (20) se termine d'un côté par une collerette annulaire extérieure (26) propre à venir se positionner en appui contre une canalisation.

5. Bride selon l'une quelconque des revendications précédentes, **caractérisée en ce qu'**elle comporte, fixée au corps extérieur, au moins une cloison (46) d'étanchéité déchirable pour former une barrière étanche aux fluides.

6. Bride selon l'une quelconque des revendications précédentes, **caractérisée en ce que** ledit corps extérieur renferme un corps intérieur (36) monobloc, essentiellement tubulaire, coaxialement et périphériquement fixé au corps extérieur, de manière étanche aux fluides, ce corps intérieur présentant une surface (38) intérieure tubulaire d'où font saillie lesdits joints annulaires d'étanchéité.

7. Ensemble pour canalisation comprenant
- une canalisation (1) à tuber présentant une extrémité ouverte (12),
- une bride d'étanchéité (14) selon Tune quelconque des revendications précédentes, disposée coaxialement à l'extrémité ouverte de la canalisation extérieure, ladite bride d'étanchéité venant en butée contre l'extrémité ouverte de ladite canalisation extérieure, et
- un tube (30) pour la circulation du fluide à l'intérieu ledit tube s'étendant à travers ladite bride et ladite canalisation, sensiblement coaxialement à la canalisation, et étant entouré par la série de joints en contact étanche avec lui.

8. Ensemble selon la revendication 7, **caractérisé en ce qu'**il comprend en outre un joint d'étanchéité (54) disposé entre l'extrémité ouverte de la canalisation (1) et la bride d'étanchéité (14).

9. Ensemble selon la revendication 7 ou la revendication 8, **caractérisé en ce qu'**il comprend en outre des moyens de fixation de manière amovible pour maintenir ladite bride d'étanchéité sur la canalisation.

## Patentansprüche

1. Dichtungsflansch (14) für Rohrleitungen mit:
- einem äußeren röhrenförmigen, einstückigen Körper (20), der eine Achse (22) aufweist,
- einer Reihe von ringförmigen Dichtungsverbindungen (32a, 32b, 32c, 32d), die im wesentlichen koaxial entlang der Achse im Inneren des äußeren Körpers angeordnet und mit der inneren Oberfläche des äußeren Körpers verbunden sind, wobei diese Verbindungen geeignet sind, eine Rohr (30) zu umgeben, wenn dieses in das Innere des Flansches quer durch die Verbindungen eingeführt ist,
**dadurch gekennzeichnet, daß** er ferner mindestens ein ringförmiges, einstückiges Organ (40) aufweist, das mit dem röhrenförmigen Körper verbunden und koaxial zu diesem ist, wobei das ringförmige Organ aus einem steiferen Material als die Reihe der ringförmigen Verbindungen besteht, um das Rohr gegenüber dem Körper zu führen und/oder zu zentrieren.

2. Flansch nach Anspruch 1, **dadurch gekennzeichnet, daß** er zwei solche ringförmige Organe (40) aufweist, die im Inneren des äußeren Körpers (20) gegen jedes seiner axialen Enden befestigt sind.

3. Flansch nach Anspruch 2, **dadurch gekennzeichnet, daß** die ringförmigen Organe (40) jedes eine kegelstumpfartige Oberfläche (42) aufweisen und in umgekehrter Richtung angeordnet sind.

4. Flansch nach einem der vorhergehenden Ansprüche, **dadurch gekennzeichnet daß** der äußere Körper (20) auf einer Seite in einem ringförmigen, äußeren Kragen (26) endet, der geeignet ist, sich unter Abstützung gegen eine Rohrleitung zu positionieren.

5. Flansch nach einem der vorhergehenden Ansprüche, **dadurch gekennzeichnet, daß** er mindestens eine an dem äußeren Körper befestigte, zerreißbare Dichtungstrennwand (46) aufweist, um eine dichte Barriere gegen Fließmittel zu bilden.

6. Flansch nach einem der vorhergehenden Ansprüche, **dadurch gekennzeichnet, daß** der äußere Körper einen einstückigen im wesentlichen röhrenförmigen inneren Körper (36) einschließt, der koaxial und umfangsmäßig an dem äußeren Körper gegen Fließmittel in dichter Weise befestigt ist, wobei der innere Körper eine innere röhrenförmige Oberfläche (38) aufweist, von welcher die ringförmigen Dichtungsverbindungen vorspringen.

7. Aufbau für Rohrleitungen mit:
- einer Rohrleitung (1) zum Verrohren, welche ein offenes Ende (12) aufweist,
- einem Dichtungsflansch (14) nach einem der vorhergehenden Ansprüche, der koaxial an dem offenen Ende der äußeren Rohrleitung angeordnet ist, wobei der Dichtungsflansch in Anschlag gegen das offene Ende der äußeren Rohrleitung kommt, und
- einem Rohr (30) für das Zirkulieren des Fließmittels im Inneren, wobei sich das Rohr quer durch den Flansch und die Rohrleitung im wesentlichen koaxial zu der Rohrleitung erstreckt und von der Reihe der Verbindungen in dichtem Kontakt mit ihm umgeben ist.

8. Aufbau nach Anspruch 7, **dadurch gekennzeichnet, daß** er ferner eine Dichtungsverbindung (54) aufweist, die zwischen dem offenen Ende der Rohrleitung (1) und dem Dichtungsflansch (14) angeordnet ist.

9. Aufbau nach Anspruch 7 oder Anspruch 8, **dadurch gekennzeichnet, daß** er ferner lösbare Befestigungsmittel aufweist, um den Dichtungsflansch an der Rohrleitung zu halten.

## Claims

1. Sealing flange (14) for a pipe to be lined, comprising:
- an outer tubular integral body (20) having an axis (22),
- a series of annular seals (32a, 32b, 32c, 32d) disposed substantially coaxially inside the outer body according to the said axis and connected to the inner surface of the outer body, these seals being capable of surrounding a lining duct (30) when this latter is introduced into the interior of the said flange through the seals,
**characterised in that** it further comprises at least one integral annular element (40) connected to and coaxial with the tubular body, the said annular element being produced from a more rigid material than the series of annular seals in order to guide and/or centre the said lining duct relative to the said body.

2. Flange as claimed in Claim 1, **characterised in that** it comprises two said annular elements (40) fixed inside the said outer body (20) towards each of the axial ends thereof.

3. Flange as claimed in Claim 2, **characterised in that** the annular elements (40) each have a frusto-conical surface (42) and are disposed in opposing directions.

4. Flange as claimed in any one of the preceding claims, **characterised in that** the outer body (20) ends on one side in an outer annular collar (26) adapted to be positioned so as to bear against a pipe.

5. Flange as claimed in any one of the preceding claims, **characterised in that** it includes, fixed to the outer body, at least one tearable sealing partition (46) to form a sealed barrier against fluids.

6. Flange as claimed in any one of the preceding claims, **characterised in that** the said outer body encloses a substantially tubular integral inner body (36) which is coaxially and peripherally fixed to the outer body in a fluid-tight manner, this inner body having a tubular inner surface (38) from which the said annular seals project.

7. Assembly for a pipe comprising:
- a pipe (1) to be lined having one open end (12),
- a sealing flange (14) as claimed in any one of the preceding claims, disposed coaxially at the open end of the outer pipe, the said sealing flange coming into abutment against the open end of the said outer pipe, and
- a lining duct (30) for the circulation of the fluid in the interior, the said lining duct extending through the said flange and the said pipe, substantially coaxially with the pipe, and being surrounded by the series of seals in sealed contact with it.

8. Assembly as claimed in Claim 7, **characterised in that** it further comprises a seal (54) disposed between the open end of the pipe (1) and the sealing flange (14).

9. Assembly as claimed in Claim 7 or Claim 8, **characterised in that** it further comprises means for fixing in a removable manner in order to retain the said sealing flange on the pipe.
